# EUROPÄISCHE PATENTSCHRIFT

(11) **EP 1 929 719 B1**
(45) Veröffentlichungstag und Bekanntmachung des Hinweises auf die Patenterteilung: **03.02.2016**
(21) Anmeldenummer: 06805908.8
(22) Anmeldetag: 27.09.2006
(51) Int. Cl.: H04W 28/06, H04W 40/24, H04L 12/721, H04L 1/16, H04W 84/18

(54) **VERFAHREN UND SYSTEM ZUR NACHRICHTENÜBERTRAGUNG IN EINEM TEMPORÄREN FUNKNETZ**
METHOD AND SYSTEM FOR TRANSMITTING MESSAGES IN A TEMPORARY RADIO NETWORK
PROCEDE ET SYSTEME POUR TRANSMETTRE DES MESSAGES DANS UN RESEAU RADIO TEMPORAIRE

(30) Priorität: 30.09.2005 DE 102005047128; 18.11.2005 DE 102005055150
(43) Veröffentlichungstag der Anmeldung: 11.06.2008
(73) Patentinhaber: Rohde & Schwarz GmbH & Co. KG, 81671 München (DE)
(72) Erfinder: LANGGUTH, Torsten, 82008 Unterhaching (DE); SCHOBER, Henrik, 85457 Wörth (DE); HAAS, Erik, 81241 München (DE); BÄSSLER, Andreas, 85238 Petershausen (DE)
(74) Vertreter: Körfer, Thomas
(86) Internationale Anmeldenummer: PCT/EP2006/009388
(87) Internationale Veröffentlichungsnummer: WO 2007/039203

(56) Entgegenhaltungen:
- EP-A2- 1 161 057
- YUKI T ET AL: "IMPROVEMENT OF TCP THROUGHPUT BY COMBINATION OF DATA AND ACK PACKETS IN AD HOC NETWORKS" IEICE TRANSACTIONS ON COMMUNICATIONS, COMMUNICATIONS SOCIETY, TOKYO, JP, Bd. E87-B, Nr. 9, September 2004 (2004-09), Seiten 2493-2499, XP001209280 ISSN: 0916-8516
- TANG K ET AL: "Mac reliable broadcast ad hoc networks" MILCOM 2001. PROCEEDINGS. COMMUNICATIONS FOR NETWORK-CENTRIC OPERATIONS: CREATING THE INFORMATION FORCE. MCLEAN, VA, OCT. 28 - 30, 2001, IEEE MILITARY COMMUNICATIONS CONFERENCE, NEW YORK, NY : IEEE, US, Bd. VOL. 1 OF 2, 28. Oktober 2001 (2001-10-28), Seiten 1008-1013, XP010579155 ISBN: 0-7803-7225-5
- METZLER J ET AL: "Two Basic Types of Layer 3 Technology", 1 January 1999 (1999-01-01), LAYER 3 SWITCHING. A GUIDE FOR IT PROFESSIONALS, PRENTICE HALL, US, PAGE(S) 53 - 64, XP007921257, ISBN: 0-13-919838-5

## Beschreibung

Die Erfindung betrifft ein Verfahren und System zur Nachrichtenübertragung in einem temporären Funknetz (mobiles Ad-hoc-Netz).

Ein mobiles Ad-hoc-Netz (z.B. MANET) ist ein aus mehreren Funkstationen gebildetes Funknetz, das in einer beliebigen Region zu einem beliebigen Zeitpunkt ohne Vorhaltung einer zentralen Infrastruktur gebildet wird und zu einem beliebigen späteren Zeitpunkt wieder aufgelöst wird. Derartige mobile Ad-hoc-Netze eignen sich vor allem für den militärischen Einsatz, in dem in einer beliebigen Kriegs- oder Krisenregion für die Dauer des Einsatzes ein Funknetz unter einer bestimmten Anzahl von miteinander kommunizierenden Funkstationen aufgebaut wird.

Aufgrund fehlender zentraler Infrastruktur - beispielsweise Basisstationen oder Satelliten - wird die Kommunikation der Nutz- und Steuerdaten dezentral zwischen den einzelnen innerhalb der Reichweite befindlichen Funkstationen durchgeführt. Eine Nachrichtenübertragung zwischen zwei Funkstationen über eine gegenüber der Reichweite der Funkstation längeren Distanz erfolgt unter Zwischenschaltung von einer oder mehreren Funkstationen, die sich räumlich zwischen der sendenden und der empfangenden Funkstation befinden (Multi-Hop-Betrieb). Die Steuerung und Überwachung eines derartigen mobilen Ad-hoc-Netzes zwischen einer als Quellknoten agierenden Funkstation, einer oder mehrerer als Zwischenknoten agierenden Funkstation(en) und einer als Zielknoten agierenden Funkstation kann autonom durch die am mobilen Ad-hoc-Netz beteiligten Netzknoten erfolgen.

Zu den wesentlichen Herausforderungen für eine Steuerung und Überwachung eines derartigen mobilen Ad-hoc-Netzes zählen:
- effiziente Nutzung der begrenzten Netzkapazität,
- Fairness in der Kanalzuweisung für jeden sendenden Netzknoten,
- Kollisionsvermeidung (insbesondere bei Hidden und Exposed Terminals),
- Wegefindung (Routing) bei mobilen Netzknoten, bei Multi-Hop-Betrieb, bei sich änderenden Netzteilnehmern im Ad-hoc-Netz und bei variablen Eigenschaften des Übertragungskanals infolge regionaler Begebenheiten.

Aktuelle Realisierungen von nobilen Ad-hoc-Netzen basieren im wesentlichen auf dem TCP/IP-Protokollstandard (Internet-Standard). Der Kanalzugriff jedes Netzknotens des mobilen Ad-hoc-Netzes erfolgt in der Medium-Access-Control-Schicht (MAC-Schicht).

Das am weitesten verbreitete Verfahren des Kanalzugriffs in mobilen Ad-hoc-Netzen ist das Carrier-Sensing-Multiple-Access-Verfahren (CSMA-Verfahren). Beim CSMA-Verfahren wird von jedem Netzknoten, der mit seinem Sendewunsch um den Netzzugriff mit anderen Netzknoten konkurriert, das Netz überwacht, bis freie Netzkapazitäten vorliegen. Beim in WLAN-Ad-hoc-Netzen zum Einsatz kommenden CSMA-Verfahren des IEEE-802.11-Standards wird von einem Netzknoten ein freie längere Netzperiode - distributed inter-frame space (DIFS) - identifiziert, eine stochastisch verteilte Wartezeit - random backoff time - zur Vermeidung einer Kollision mit einem anderen Netzknoten, der zur selben Zeit einen Sendewunsch aufweist, abgewartet und der Netzzugriff durch Übertragung der Nachricht gestartet. Ein erfolgreicher Empfang der vom Quellknoten zum Zielknoten zu übertragenen Nachricht wird durch den Zielknoten und jeden Zwischenknoten nach Ablauf einer freien kürzeren Netzperiode - short inter-frame space (SIFS) - mit einer Bestätigung - Acknowledgment (ACK) - quittiert. Falls der Quellknoten bzw. die sendenden Zwischenknoten die Bestätigung des Zielknotens bzw. des empfangenden Zwischenknotens nicht innerhalb eines bestimmten Zeitintervalls empfängt oder eine von seiner gesendeten Nachricht abweichende Nachricht empfängt, liegt eine fehlerhafte Nachrichtenübertragung vor und der Quellknoten bzw. der sendende Zwischenknoten startet die Übertragung der verloren gegangenen oder fehlerhaft übertragenen Nachricht nach Identifizierung einer freien längeren Netzperiode und Abwarten der stochastischen Wartezeit erneut.

Das CSMA-Verfahren im WLAN-Standard 802.11 ermöglicht eine vergleichsweise faire Verteilung des Übertragungskanals auf alle Netzteilnehmer mit Sendewunsch und reduziert die Anzahl von Kollisionen im Ad-hoc-Netz. Zusätzliche Kollisionsvermeidungen können nach dem WLAN-Standard IEEE 802.11 durch Einführung des RTS/CTS-Betriebsmodus erzielt werden, bei dem der sendende Netzknoten beim empfangenden Netzknoten vor Übertragung der Nachricht mit einer Anforderung - request-to-send-Signal (RTS-Signal) - einen exklusiven Netzzugriff ankündigt und vom empfangenden Netzknoten mit einer Zuweisung - clear-to-send-Signal (CTS-Signal) - den exklusiven Netzzugriff bestätigt wird. Da die Zuweisung - CTS-Signal - auch von allen anderen sendenden Netzknoten in Reichweite des empfangenden Netzknotens empfangen wird, ist gewährleistet, dass einerseits nur ein sendender Netzknoten, der sich in Reichweite des empfangenden Netzknotens, aber nicht in Reichweite der anderen sendenden Netzknoten befindet, einen Zugriff auf den Übertragungskanal erhält (Hidden-Terminal-Problematik) und andererseits zwei zu jeweils einem empfangenden Netzknoten sendende Netzknoten gleichzeitig einen Zugriff auf den Übertragungskanal erhalten, wenn die beiden empfangenden Netzknoten nicht in Reichweite zueinander stehen (Exposed-Terminal-Problematik).

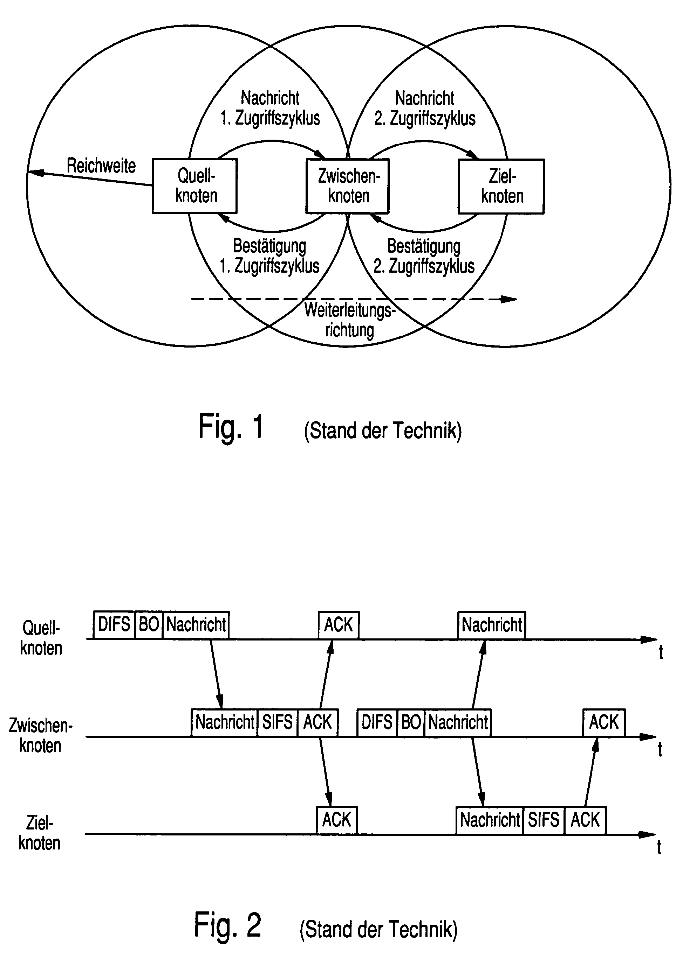

Erfolgt die Nachrichtenübertragung im mobilen Ad-hoc-Netz zwischen Quellknoten und Zielknoten gemäß Fig. 1 im Multi-Hop-Betrieb über einen oder mehrere Zwischenknoten, so sind weitere Kanalzugriffe erforderlich. Wie in Fig. 2 für den Fall eines Zwischenknotens dargestellt, wird der

Übertragungskanal in Richtung des Quellknotens unnötigerweise mit der vom Zwischen- zum Zielknoten zu übertragenen Nachricht und in Richtung des Zielknotens unnötigerweise mit der vom Zwischen- zum Quellknoten zu übertragenen Bestätigung belastet. Diese unnötige Belastung des Übertragungskanals reduziert die Effizienz in der Nutzung der begrenzten Netzkapazität.

Um die Effizienz in der Nutzung der begrenzten Netzkapazität zu erhöhen, wird in Xiao, Y.: "Concatenation and Piggyback Mechanisms for the IEEE 802.11 MAC", Proceedings of IEEE Wireless Communications and Networking Conference, 2004, Atlanta, und in Yuki T. et al.: "Improvement of TCP Throughput by Combination of Data and ACK Packets in Ad Hoc Networks", in IEICE Transactions on Communications, Communication Society, Tokyo, JP, Bd. E87-B, Nr. 9, September 2004, Seiten 2493-2499, jeweils ein Verfahren vorgestellt, in dem die Bestätigung des erfolgreichen Empfangs der vom Quellknoten an den Zielknoten zu übertragenen Nachricht im Huckepackverkehr mit einer vom Zielknoten zum Quellknoten zu übertragenen Nachricht verschickt wird. Da mit Eintreffen der vom Quellknoten zum Zielknoten zu übertragenen Nachricht im Zielknoten im allgemeinen nicht sofort ein vom Zielknoten zum Quellknoten zu übertragene Nachricht vorliegt, ist unter Umständen mit einer erheblichen Verzögerung des Huckepackverkehrs zu rechnen und damit mit einem verspäteten Eintreffens der Bestätigung in Quellknoten. Diese verspätet eingetroffene Bestätigung kann im Quellknoten zu einem Ablauf eines Timers und damit zu einer Fehlermeldung und einer unerwünschten wiederholten Übertragung der Nachricht vom Quellknoten zum Zielknoten führen.

Aufgabe der Erfindung ist es deshalb, ein Verfahren und System zur Nachrichtenübertragung in einem mobilen Ad-hoc-Netz zwischen einem Quellknoten und einem Zielknoten unter Zwischenschaltung mindestens eines Zwischenknotens derart weiterzuentwickeln, dass die zu übertragene Empfangsbestätigung der Zwischenknoten die begrenzten Netzkapazitäten nicht unnötig belastet und rechtzeitig beim Quellknoten bzw. vorhergehenden Zwischenknoten eintrifft.

Die Aufgabe wird bezüglich des Verfahrens durch die Merkmale des Anspruchs 1 und bezüglich des Systems durch die Merkmale des Anspruchs 6 gelöst. Die abhängigen Ansprüche enthalten vorteilhafte Weiterbildungen.

Erfindungsgemäß wird die Bestätigung des erfolgreichen Empfangs einer vom Quellknoten oder einem vorhergehenden Zwischenknoten gesendeten Nachricht durch den Zwischenknoten in Huckepackverkehr mit derselben Nachricht, die vom Zwischenknoten an einen nachfolgenden Zwischenknoten oder an den Zielknoten im Multi-Hop-Betrieb gesendet wird, verpackt. Durch die Verpackung der Bestätigung und der Nachricht in Huckepack wird der Übertragungskanal minimal belastet und damit effizient genutzt. Da die zu übertragene Nachricht im Huckepack mit der Bestätigung vom Zwischenknoten sofort nach Ablauf einer freien kürzeren Netzperiode (SIFS) gesendet wird, kann vom Quellknoten die Bestätigung des erfolgreichen Empfangs der Nachricht beim Zielknoten vor Ablauf eines zulässigen Zeitintervalls empfangen werden. Eine unerwünschte wiederholte Übertragung der Nachrichten vom Quellknoten zum Zielknoten ist in diesem Falle nicht nötig.

Die korrekte Zuordnung der im Huckepackverkehr empfangenen Bestätigung mit der zugehörigen Nachricht durch den die Nachricht versendenden Quellknoten erfolgt anhand der ebenfalls im Huckepack-Datenpaket enthaltenen Nachricht und der Adresse des Huckepack-Datenpaketes, die mit der Adresse des Zielknotens übereinstimmt.

Die Versendung eines Huckepack-Datenpakets, welches die empfangene Nachricht und die Bestätigung des erfolgreichen Empfangs der Nachrichten beinhaltet, durch den Zwischenknoten erfordert im Multi-Hop-Betrieb von der im mobilen Ad-hoc-Netz integrierten Funkstation, welche die Nachricht empfängt, eine Auswertung, anhand der die Funkstation ermittelt, ob sie für die empfangene Nachricht als Zwischen- oder Zielknoten agiert. Diese Auswertung erfolgt in der Medium-Access-Control-Schicht des nach einem paketorientierten Protokollstandard, beispielsweise dem TCP/IP-Protokollstandard, arbeitenden mobilen Ad-hoc-Netz.

Die Auswertung einer Funkstation, ob sie für eine empfangene Nachricht als Zwischen- oder Zielknoten agiert, ist Inhalt der Routenplanung (Routing). In einer ersten Variante der Routenplanung - "Source/Path-Routing" - bei einer nach einem paketorientierten Protokollstandard arbeitenden Nachrichtenübertragung werden vom Quellknoten im Statusteil - Header - des die Nachricht beinhaltenden Übertragungsrahmens die Adressen des Zielknotens und sämtlicher Zwischenknoten abgelegt. Die eine Nachricht empfangende Funkstation muss folglich nur diesen Statusteil des Übertragungsrahmens der empfangenen Nachricht auswerten, um festzustellen, ob sie als Zwischen- oder Zielknoten agieren muss. In einer zweiten Variante der Routenplanung - "Hop-by-Hop-Routing" - werden aus der im Statusteil des Übertragungsrahmens der empfangene Nachricht abgelegten Adresse des Zielknotens und einer in der Funkstation abgelegten lokalen Datenbasis der nächste Zwischenknoten ermittelt. Diese lokale Datenbasis - Forward Database (FDB) - ist üblicherweise in der Vermittlungsschicht, beispielsweise IP-Schicht, abgelegt. Aus Geschwindigkeitsgründen wird diese lokale Datenbasis in einen Speicherbereich, beispielsweise in der Medium-Access-Control-Schicht, verlagert, auf den die Medium-Access-Control-Schicht einen schnell Zugriff besitzt und den eine mit dem FDB-Management kooperierende Routing-Instanz in der Vermittlungs-Schicht in einem bestimmten Rhythmus aktualisiert.

Erkennt die Funkstation, dass sie als Zielknoten der empfangenen Nachricht dient, so sendet sie die Bestätigung des erfolgreichen Empfangs ohne Durchführung eines Huckepack-Verkehrs. Außerdem gibt sie die empfangene Nachricht an die höheren Schichten - Anwendungs- und Transport-Schicht - zur weiteren Auswertung weiter.

Eine Ausführungsform des erfindungsgemäßen Verfahrens und Systems zur Nachrichtenübertragung in einem temporären Funknetz (mobiles Ad-hoc-Netz) wird im folgenden unter Berücksichtigung der Zeichnung näher erläutert. In der Zeichnung zeigen:
- Fig. 1: eine Prinzipdarstellung eines Multi-Hop-Betriebs einer Nachrichtenübertragung in einem temporären Funknetz (mobiles Ad-hoc-Netz) nach dem Stand der Technik,
- Fig. 2: ein Kanalbelegungsdiagramm einer Nachrichtenübertragung in einem temporären Funknetz (mobiles Ad-hoc-Netz) nach dem Stand der Technik,
- Fig. 3: ein Flußdiagramm eines erfindungsgemäßen Verfahrens zur Nachrichtenübertragung in einem temporären Funknetz (mobiles Ad-hoc-Netz),
- Fig. 4: eine Schichtstruktur eines erfindungsgemäßen Systems zur Nachrichtenübertragung in einem temporären Funknetz (mobilen Adhoc-Netz) und
- Fig. 5: ein Kanalbelegungsdiagramm eines erfindungsgemäßen Verfahrens und Systems zur Nachrichtenübertragung in einem temporären Funknetz (mobiles Ad-hoc-Netz).

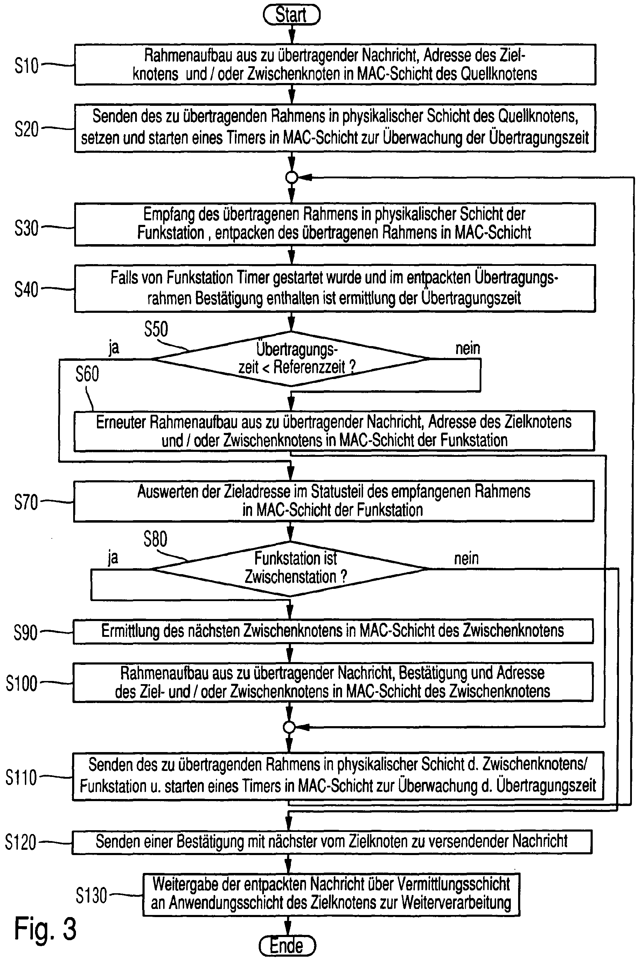

Im folgenden wird anhand von Fig. 3 das erfindungsgemäße Verfahren zur Nachrichtenübertragung in einem temporären Funknetz (mobiles Ad-hoc-Netz) vorgestellt:
Im ersten Verfahrensschritt S10 des erfindungsgemäßen Verfahrens wird in der Medium-Access-Control-Schicht des Quellknotens der Übertragungsrahmen aus der zu übertragenen Nachricht im Datenteil und aus der Adresse des Zielknotens im Fall einer Wegefindung mittels "Hop-by-Hop-Routing" oder aus den Adressen aller Zwischenknoten und des Zielknotens im Fall einer Wegefindung mittels "Source-/Path-Routing" im Statusteil - Header - aufgebaut. Im darauffolgenden Verfahrensschritt S20 wird der in der MAC-Schicht in Verfahrensschritt S10 erstellte Übertragungsrahmen von der physikalischen Schicht des Quellknotens im Broadcast-Betrieb der als Quellknoten agierenden Funkstation gesendet. Zusätzlich wird ein Timer in der MAC-Schicht des Quellknotens zur Überwachung der Übertragungszeit der Nachricht gesetzt und gestartet.

Der vom Quell-, Zwischen- oder Zielknoten gesendete Übertragungsrahmen wird in Verfahrensschritt S30 von einer in Reichweite des Quell-, Zwischen- oder Zielknotens befindlichen Funkstation in dessen physikalischer Schicht empfangen. Zusätzlich wird in Verfahrnsschritt S30 der empfangene Rahmen in der MAC-Schicht der Funkstation entpackt.

Falls von der Funkstation ein Timer gestartet wurde und und im entpackten Üpbertragungsrahmen eine Bestätigung enthalten ist, wird der Timer zurückgesetzt und aus dem Timer-Stand die Übertragungszeit der Nachricht von der Funkstation zum nächsten Zwischenknoten bzw. Zielknoten zzgl. der Rückübertragungszeit der Bestätigung vom nächsten Zwischenknoten bzw. Zielknoten zur Funkstation ermittelt.

Ergibt der Vergleich der in Verfahrensschritt S40 ermittelten Übertragungszeit mit einer vorgegebenen Referenzzeit in Verfahrensschritt S50 ein Überschreiten der Referenzzeit durch die ermittelte Übertragungszeit, so wird in Verfahrensschritt S60 eine erneute Übertragung der Nachricht durch erneuten Rahmenaufbau aus zu übertragender Nachricht und Adresse des Ziel- und/oder Zwischenknoten in der MAC-Schicht der Funkstation durchgeführt.

Ergibt der Vergleich der in Verfahrensschritt S40 ermittelten Übertragungszeit mit einer vorgegebenen Referenzzeit in Verfahrensschritt S50 ein Unterschreiten der Referenzzeit durch die ermittelte Übertragungszeit, so wird in der MAC-Schicht der den Übertragungsrahmen empfangenden Funkstation in Verfahrensschritt S70 der Statusteil - Header - ausgewertet, um festzustellen, ob die empfangende Funkstation ein Knoten zwischen Quell- und Zielknoten ist und ob die empfangende Funkstation einen Zwischen- oder den Zielknoten darstellt. Hierzu wird die im Statusteil des Übertragungsrahmens abgelegte Adresse des Zielknotens im Fall des "Hop-by-Hop-Routing" und die Adressen aller Zwischenknoten und des Zielknotens im Fall des "Source-/Path-Routing" ausgelesen und im Fall des "Hop-by-Hop-Routings" ermittelt, ob sich die Funkstation zwischen Quell- und Zielknoten befindet, und im Fall des "Source-/Path-Routing", ob die Adresse der Funkstation mit der Adresse eines Zwischen- oder des Zielknotens übereinstimmt. Liegt die Funkstation nicht auf der Verbindung zwischen Quell- und Zielknoten und besteht keine Identität zwischen der Funkstation und einem der geplanten Zwischen- und des Zielknotens, so endet die weitere Verarbeitung in der MAC-Schicht und in allen übergeordneten Schichten der Funkstation.

Ergibt der Vergleich der Adresse der Funkstation mit der im Statusteil des Übertragungsrahmens abgelegten Adresse eines Zwischenknoten in Verfahrensschritt S80 eine Identität und liegt folglich die Funkstation zwischen Quell- und Zielknoten und ist somit ein Zwischenknoten, so wird im darauffolgenden Verfahrensschritt S90 - einzig für den Fall des "Hop-by-Hop-Routings" - in der MAC-Schicht der als Zwischenknoten agierenden Funkstation der nächste Zwischenknoten ermittelt. Der nächste Zwischenknoten wird aus der Adresse des Zielknotens und Verbindungsdaten bestimmt, welche in einer im Zwischenknoten vorhandenen lokalen Datenbasis abgelegt sind. Da diese lokale Datenbasis - "Forward-Database" (FDB) - üblicherweise in der Vermittlungs-Schicht abgelegt ist und bearbeitet wird und deshalb für eine schnelle Ermittlung im Sinne einer zügigen Nachrichtenübertragung nicht geeignet ist, wird eine Kopie der FDB-Datenbank in einen Speicherbereich verlagert, auf den die MAC-Schicht einen schnellen Zugriff besitzt. Um die Aktualität des Datenbestands der FDB-Datenbank zu gewährleisten, wird diese von einer Routing-Instanz der Vermittlungs-Ebene in einem bestimmten Zeitintervall aktualisiert.

Im nächsten Verfahrensschritt S100 wird der Übertragungsrahmen aus der zum Zielknoten zu übertragenen Nachricht im Huckepack mit der Bestätigung des erfolgreichen Empfangs der zum Zwischenknoten zu übertragenen Nachricht und im Statusteil aus der im aktuellen Zwischenknoten ermittelten Adresse des nächsten Zwischenknotens - im Fall des "Hop-by-Hop-Routings" - oder aus den mittels "Source-/Path-Routing" geplanten Adressen aller Zwischen- und Zielknoten zusammengesetzt.

Nach Abwarten einer freien kürzeren Netzperiode - SIFS - seit dem Empfang des mit der zum Zielknoten zu übertragenen Nachricht in Verfahrensschritt S30 wird der in Verfahrensschritt S60 oder S100 aufgebaute Übertragungsrahmen in Verfahrensschritt S110 von der aktuellen Funkstation gesendet und ein Timer in der MAC-Schicht der Funkstation zur erneuten Überwachung der Übertragungszeit gesetzt und gestartet.

Dieser von der aktuellen Funkstation gesendete Übertragungsrahmen wird von einer in Reichweite befindlichen Funkstation gemäß Verfahrensschritt S30 empfangen und entpackt.

Ist die Funkstation gemäß Verfahrensschritt S80 der Zielknoten, so wird in Verfahrensschritt S120 eine Bestätigung des erfolgreichen Empfangs der Nachricht durch den Zielknoten mit der nächsten vom Zielknoten zu sendenden Nachricht verpackt und versendet.

Schließlich wird im abschließenden Verfahrensschritt S130 die in der MAC-Schicht entpackte Nachricht über die Vermittlungs-Schicht an die Anwendungsschicht des Zielknoten zur Weiterverarbeitung weitergereicht.

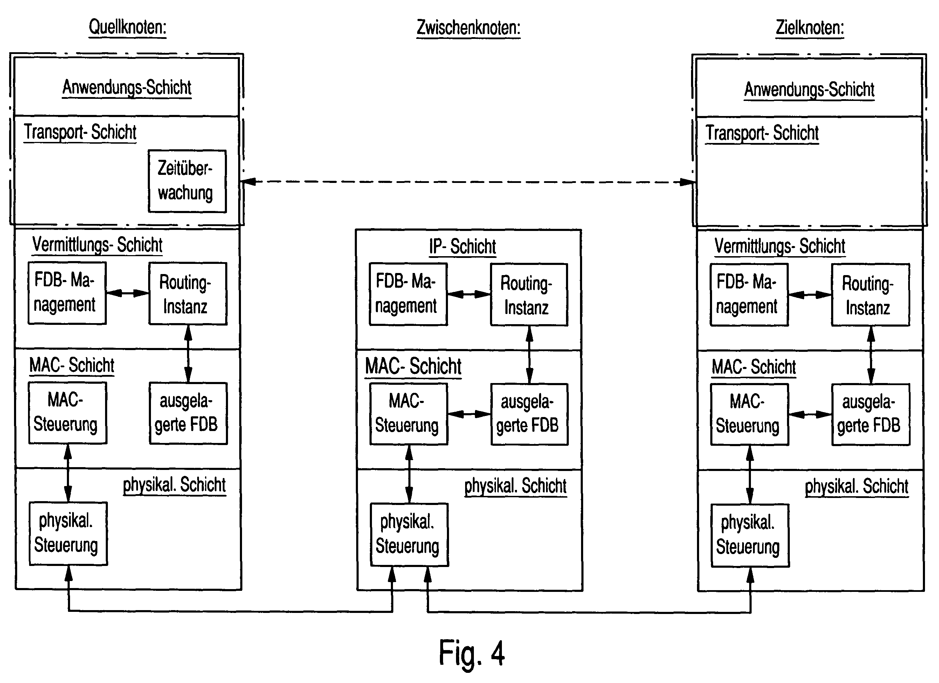

In Fig. 4 ist die Schichtstruktur eines erfindungsgemäßen Systems zur Nachrichtenübertragung in einem temporären Funknetz (mobilen Ad-hoc-Netz) für den Fall eines einzigen Zwischenknoten dargestellt. Hierbei sind die für die Wegefindung mittels "Hop-by-Hop-Routing" vorgesehenen Einheiten - FDB-Management, ausgelagerte FDB-Datenbank - in den einzelnen Schichten dargestellt.

Zu erkennen ist, dass alle an der Nachrichtenübertragung beteiligten Knoten eine physikalische Schicht im wesentlichen zur Steuerung und Überwachung des Transports der Nachrichten über ein physikalisches Medium - in der Zeichnung durchgezogene Linien -, eine MAC-Schicht im wesentlichen zum Management der Übertragungsrahmen - Aufbau und Entpackung - sowie zur ausgelagerten Wegefindung mittels "Hop-by-Hop-Routing" und eine Verbindungsschicht, beispielswise IP-Schicht, im wesentlichen zum übergeordneten Routen-Management aufweisen.

Einzig im Quell- und Zielknoten sind zusätzliche Schichten
- durch strich-punktierte Linien in Fig. 4 gekennzeichnet
- darüber hinaus für den Erfindungsgedanken wesentlich.
Hierbei handelt es sich um die Transportschicht, beispielsweise TCP-Schicht, im wesentlichen zum logischen Verbindungsauf- und -abbau zwischen den Netzteilnehmern - in Fig. 4 gestrichelte Linie - und die Anwendungsschicht, in der die zu übertragenen Nachrichten vor- bzw. nachbearbeitet werden.

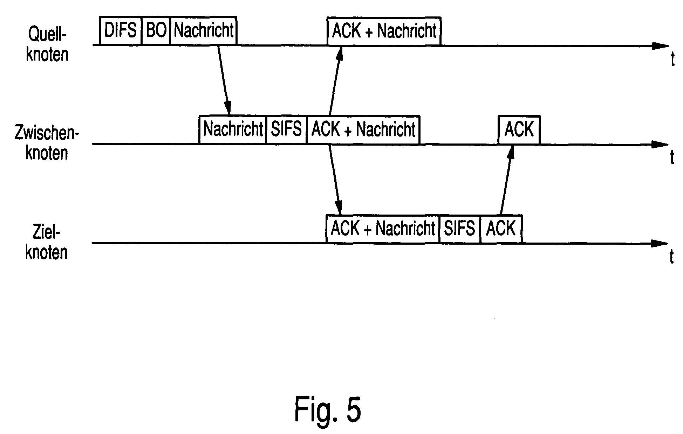

Im Kanalbelegungsdiagramm eines erfindungsgemäßen Verfahrens und Systems zur Nachrichtenübertragung in einem temporären Funknetz (mobiles Ad-hoc-Netz), das in Fig. 5 gezeigt ist, sind im Vergleich zum Kanalbelegungsdiagramm ohne Huckepack-Verkehr in Fig. 2 zwei Vorteile zu erkennen:
- deutliche Reduzierung der Kanalbelegung durch die Huckepack-Bündelung der zum Zielknoten zu übertragenen Nachricht mit der Bestätigung des erfolgreichen Empfangs der zum Zielknoten zu übertragenen Nachricht in einem einzigen Übertragungsrahmen gegenüber zwei Übertragungsrahmen - Bestätigung (ACK) und Nachricht - des Übertragungsrahmen ohne Huckepack,
- deutliche Reduzierung der Übertragungszeit der Nachricht vom Quell- zum Zielknoten einschließlich der Bestätigungsnachricht.

Gegenüber dem Stand der Technik ist die deutliche Reduzierung der Übertragungszeit hervorzuheben, da für die Übertragung der Bestätigung von einem Zwischen- oder Zielknoten zu einem vorherigen Zwischenknoten oder zum Quellknoten der nächst möglich vom Zwischenknoten zu versendende Übertragungsrahmen genutzt wird.

## Patentansprüche

1. Verfahren zur Nachrichtenübertragung nach einem paketorientierten Protokoll-Standard über ein temporäres Funknetz zwischen einer als Quellknoten und einer als Zielknoten agierenden Funkstation unter Zwischenschaltung von mindestens einer als Zwischenknoten agierenden Funkstation, in dem von demjenigen Zwischenknoten, der die vom Quellknoten gesendete Nachricht erfolgreich empfangen hat, eine Bestätigung des erfolgreichen Empfangs zusammen mit einer vom Zwischenknoten zu sendenden Nachricht übertragen wird,
wobei die vom Zwischenknoten zusammen mit der Bestätigung des erfolgreichen Empfangs zu sendende Nachricht die vom Quellknoten erfolgreich empfangene Nachricht ist,
**dadurch gekennzeichnet, dass** die eine Nachricht erfolgreich empfangende und als Zwischenknoten agierende Funkstation den nächsten Zwischen- oder Zielknoten aus einer lokalen Datenbasis und aus einer im Statusteil eines die zu übertragene Nachricht beinhaltenden Übertragungsrahmens abgelegten Adresse des Zielknotens ermittelt, und dass die Auswertung der eine Nachricht erfolgreich empfangenen Funkstation hinsichtlich ihrer Funktion als Zwischen- oder Zielknoten in einer Medium-Access-Control-Schicht erfolgt,
wobei die Datenbasis eine Kopie einer Forward-Database-Datenbank in der Vermittlungs-Schicht ist, die in einem Speicherbereich in die Medium-Access-Control-Schicht verlagert ist, und eine ausgelagerte lokale Routing-Datenbank darstellt und
dass die lokale Routing-Datenbank von einer Routing-Instanz der Vermittlungsschicht in Kooperation mit einem die Forward-Database-Datenbank in der Vermittlungsschicht verwaltenden Forward-Database-Management aktualisiert wird.

2. Verfahren zur Nachrichtenübertragung nach Anspruch 1,
**dadurch gekennzeichnet,**
**dass** eine Funkstation, die eine vom Quellknoten gesendete Nachricht erfolgreich empfängt, durch Auswertung der empfangenen Nachricht ermittelt, ob sie für die empfangene Nachricht die Funktion eines Zwischen- oder eines Zielknotens erfüllt.

3. Verfahren zur Nachrichtenübertragung nach Anspruch 1,
**dadurch gekennzeichnet,**
**dass** die eine Nachricht erfolgreich empfangende Funkstation ihre Funktion als Zwischen- oder Zielknoten aus dem Statusteil eines die zu übertragene Nachricht beinhaltenden Übertragungsrahmens ermittelt.

4. Verfahren zur Nachrichtenübertragung nach Anspruch 3,
**dadurch gekennzeichnet,**
**dass** die eine Nachricht erfolgreich empfangende und als Zwischenknoten agierende Funkstation den nächsten Zwischen- oder Zielknoten aus dem Statusteil eines die zu übertragene Nachricht beinhaltenden Übertragungsrahmens ermittelt, der alle vom Quellknoten ermittelten Zwischen- und Zielknoten enthält.

5. Verfahren zur Nachrichtenübertragung nach Anspruch 3,
**dadurch gekennzeichnet,**
**dass** die eine Nachricht erfolgreich empfangende und als Zielknoten agierende Funkstation einzig die Bestätigung der erfolgreich empfangenen Nachricht sendet.

6. System zur Nachrichtenübertragung nach einem paketorientierten Protokoll-Standard über ein temporäres Funknetz zwischen einer als Quellknoten und einer als Zielknoten agierenden Funkstation unter Zwischenschaltung von mindestens einer als Zwischenknoten agierenden Funkstation,
wobei eine Übertragung einer Bestätigung eines erfolgreichen Empfangs einer vom Quellknoten gesendeten Nachricht zusammen mit einer zu sendenden Nachricht durch einen Zwischenknoten erfolgt,
wobei die vom Zwischenknoten zusammen mit der Bestätigung des erfolgreichen Empfangs zu sendende Nachricht die vom Quellknoten erfolgreich empfangene Nachricht ist, **dadurch gekennzeichnet, dass** eine Ermittlung des nächsten Zwischen- oder Zielknotens durch die eine Nachricht erfolgreich empfangende und als Zwischenknoten agierende Funkstation aus einer lokalen Datenbasis und aus einer im Statusteil eines die zu übertragene Nachricht beinhaltenden Übertragungsrahmens abgelegten Adresse des Zielknotens erfolgt, und dass die Auswertung der eine Nachricht erfolgreich empfangenen Funkstation hinsichtlich ihrer Funktion als Zwischen- oder Zielknoten in einer Medium-Access-Control-Schicht erfolgt,
wobei die Datenbasis eine Kopie einer Forward-Database-Datenbank in der Vermittlungs-Schicht ist, die in einem Speicherbereich in die Medium-Access-Control-Schicht verlagert ist, und eine ausgelagerte lokale Routing-Datenbank darstellt und
dass eine Aktualisierung der lokalen Routing-Datenbank von einer Routing-Instanz der Vermittlungsschicht in Kooperation mit einem die Forward-Database-Datenbank in der Vermittlungsschicht verwaltenden Forward-Database-Management erfolgt.

## Claims

1. A method for message transmission according to a packet-orientated protocol standard via a temporary radio network between a radio station acting as a source node and a radio station acting as a target node with an interconnection of at least one radio station acting as an intermediate node, wherein an acknowledgement of successful receipt is transmitted from the intermediate node which has successfully received the message transmitted from the source node together with a message to be transmitted from the intermediate node,
wherein the message to be transmitted from the intermediate node together with the acknowledgement of successful receipt is the message successfully received from the source node,
**characterised in that**
the radio station successfully receiving a message and acting as an intermediate node determines the next intermediate node or target node from a local database and from the status component of a transmission frame of the target node containing the message to be transmitted,
and
that the evaluation of the radio station successfully receiving a message with regard to its function as an intermediate node or target node takes place in a medium-access-control layer,
wherein the database is a copy of a forward-database-databank in the network layer, which is rolled out in a storage region into the medium-access-control layer and represents a rolled out, local routing databank and
that the local routing databank is updated by a routing instance of the network layer in cooperation with a forward-database management managing the forward-database databank in the network layer.

2. The method for message transmission according to claim 1,
**characterised in that**
a radio station, which successfully receives a message transmitted from the source node, determines by evaluating the received message, whether it fulfils the function of an intermediate node or a target node for the received message.

3. The method for message transmission according to claim 1,
**characterised in that**
the radio station successfully receiving a message determines its function as an intermediate node or a target node from the status component of a transmission frame containing the message to be transmitted.

4. The method for message transmission according to claim 3,
**characterised in that**
the radio station successfully receiving a message and acting as an intermediate node determines the next intermediate node or target node from the status component of a transmission frame containing the message to be transmitted, which contains all of the intermediate nodes and target nodes determined by the source node.

5. The method for message transmission according to claim 3,
**characterised in that**
the radio station successfully receiving a message and acting as a target node transmits only the acknowledgement of the successfully-received message.

6. A system for message transmission according to a packet-orientated protocol standard via a temporary radio network between a radio station acting as a source node and a radio station acting as a target node with an interconnection of at least one radio station acting as an intermediate node,
wherein a transmission of an acknowledgement of a successful receipt of a message transmitted from the source node is implemented by an intermediate node together with a message to be transmitted,
wherein the message to be transmitted by the intermediate node with the acknowledgement of the successful receipt is the message successfully received by the source node
**characterised in that**
a determination of the next intermediate node or target node by the radio station successfully receiving a message and acting as intermediate node is implemented from a local database and from an address of the target node stored in the status component of a transmission frame containing the message to be transmitted,
and
that the evaluation of the radio station successfully receiving a message with regard to its function as an intermediate node or target node is implemented in a medium-access-control layer,
wherein the database is a copy of a forward-database-databank in the network layer, which is rolled out in a storage region into the medium-access-control layer and represents a rolled out, local routing databank and
that an updating of the local routing databank is implemented by a routing instance of the network layer in cooperation with a forward-database management managing the forward-database databank in the network layer.

## Revendications

1. Procédé pour transmettre des messages selon un standard de protocole orienté par paquets par l'intermédiaire d'un réseau radio temporaire entre une station radio fonctionnant en tant que noeud source et une station radio fonctionnant en tant que noeud destination par l'intermédiaire d'au moins une station radio fonctionnant en tant que noeud intermédiaire, dans lequel une confirmation de la réception réussie est transmise conjointement avec un message à envoyer depuis le noeud intermédiaire par ce noeud intermédiaire, qui a reçu avec succès le message envoyé par le noeud source,
dans lequel le message à envoyer par le noeud intermédiaire conjointement avec la confirmation de la réception réussie est le message reçu avec succès par le noeud source,
**caractérisé en ce que**
la station radio recevant avec succès un message et fonctionnant en tant que noeud intermédiaire recherche le noeud intermédiaire ou le noeud destination suivant à partir d'une base de données locale et à partir d'une adresse du noeud destination mémorisée dans une partie d'état d'une trame de transmission contenant le message à transmettre,
**en ce que** l'évaluation de la station radio recevant avec succès un message est effectuée par rapport à sa fonction en tant que noeud intermédiaire ou noeud destination dans une couche de contrôle d'accès aux médias,
dans lequel la base de données est une copie d'une banque de données de base de données de transfert dans la couche réseau, qui est déplacée dans une zone de mémoire dans la couche de contrôle d'accès aux médias, et représente une banque de données d'acheminement locale transférée et
**en ce que** la banque de données d'acheminement locale est actualisée par une instance d'acheminement de la couche réseau en coopération avec une gestion de base de données de transfert gérant la banque de données de la base de données de transfert dans la couche réseau.

2. Procédé pour transmettre des messages selon la revendication 1, **caractérisé en ce que**
une station radio, qui reçoit avec succès un message envoyé par le noeud source, détecte par évaluation du message reçu, si elle remplit la fonction de noeud intermédiaire ou de noeud destination pour le message reçu.

3. Procédé pour transmettre des messages selon la revendication 1, **caractérisé en ce que**
la station radio recevant avec succès un message détecte sa fonction en tant que noeud intermédiaire ou noeud destination à partir de la partie d'état d'une trame de transmission contenant le message à transmettre.

4. Procédé pour transmettre des messages selon la revendication 3, **caractérisé en ce que**
la station radio recevant avec succès un message et fonctionnant en tant que noeud intermédiaire détecte le noeud intermédiaire ou le noeud destination suivant à partir de la partie d'état d'une trame de transmission contenant le message à transmettre, qui contient tous les noeuds intermédiaires et les noeuds destinations détectés par le noeud source.

5. Procédé pour transmettre des messages selon la revendication 3, **caractérisé en ce que**
la station radio recevant avec succès un message et fonctionnant en tant que noeud destination envoie seulement la confirmation du message reçu avec succès.

6. Système pour transmettre des messages selon un standard de protocole orienté par paquets par l'intermédiaire d'un réseau radio temporaire entre une station radio fonctionnant en tant que noeud source et une station radio fonctionnant en tant que noeud destination par l'intermédiaire d'au moins une station radio fonctionnant en tant que noeud intermédiaire,
dans lequel une transmission d'une confirmation d'une réception réussie d'un message envoyé par le noeud source est effectuée par un noeud intermédiaire conjointement avec un message à envoyer,
dans lequel le message à envoyer conjointement avec la confirmation de la réception réussie par le noeud intermédiaire est le message reçu avec succès par le noeud source, **caractérisé en ce que**
une détection du noeud intermédiaire ou du noeud destination suivant est effectuée par la station radio recevant avec succès un message et fonctionnant en tant que noeud intermédiaire à partir d'une base de données locale et à partir d'une adresse du noeud destination stockée dans une partie d'état d'une trame de transmission contenant le message à transmettre, et
**en ce que** l'évaluation de la station radio recevant avec succès un message est effectuée par rapport à sa fonction en tant que noeud intermédiaire ou noeud destination dans une couche de contrôle d'accès aux médias,
dans lequel la base de données est une copie d'une banque de données de base de données de transfert dans la couche réseau, qui est déplacée dans une zone de stockage dans la couche de contrôle d'accès aux médias, et représente une banque de données d'acheminement locale transférée et
**en ce qu'**une actualisation de la banque de données d'acheminement locale est effectuée par une instance d'acheminement de la couche réseau en coopération avec une gestion de base de données de transfert gérant la banque de données de la base de données de transfert dans la couche réseau.
